Europäisches Patentamt

**European Patent Office**

Office européen des brevets

(19)

(11) Publication number: **0 250 593 B1**

# (12) EUROPEAN PATENT SPECIFICATION

(45) Date of publication of patent specification: **18.09.91**  (51) Int. Cl.5: **C04B 35/58**

(21) Application number: **86900260.0**

(22) Date of filing: **20.12.85**

(86) International application number:
**PCT/JP85/00700**

(87) International publication number:
**WO 87/03867 (02.07.87 87/14)**

(54) **HIGH-STRENGTH CERAMICS CONTAINING ALPHA-SIALON.**

(43) Date of publication of application:
**07.01.88 Bulletin 88/01**

(45) Publication of the grant of the patent:
**18.09.91 Bulletin 91/38**

(84) Designated Contracting States:
**AT DE FR GB SE**

(56) References cited:
**EP-A- 0 124 989**
**EP-A- 0 152 488**

(73) Proprietor: **RESEARCH DEVELOPMENT COR-PORATION OF JAPAN**
**5-2, Nagata-cho 2-chome**
**Chiyoda-ku Tokyo 100(JP)**

Proprietor: **NATIONAL INSTITUTE FOR RE-SEARCH IN INORGANIC MATERIALS, SCI-ENCE AND TECHNOLOGY AGENCY**
**1, Namiki 1-chome Sakuramura Niihari-gun Ibaraki 305(JP)**

Proprietor: **SHINAGAWA REFRACTORIES CO., LTD.**
**2-1, Ohtemachi 2-chome Chiyoda-ku Tokyo 100(JP)**

(72) Inventor: **MITOMO, Mamoru**
**356-223, Ushiku Ushiku-machi Inashiki-gun Ibaraki 300-12(JP)**
Inventor: **ISHIZAWA, Kenki**
**394, Higashikatakami Bizen-shi Okayama 705(JP)**

Inventor: **AYUZAWA, Nobuo**
**1935, Inbe Bizen-shi**
**Okayama 705(JP)**
Inventor: **SHIRANITA, Akira**
**1931, Inbe Bizen-shi**
**Okayama 705(JP)**
Inventor: **TAKAI, Masamichi**
**1931, Inbe Bizen-shi**
**Okayama 705(JP)**
Inventor: **UCHIDA, Norimasa**
**390, Higashikatakami Bizen-shi**
**Okayama 705(JP)**


(74) Representative: **Kraus, Walter, Dr. et al**
**Patentanwälte Kraus, Weisert & Partner**
**Thomas-Wimmer-Ring 15**
**W-8000 München 22(DE)**

## Description

### TechlonogicalField

This invention relates to novel $\alpha$-sialon-containing ceramics containing $\alpha$-sialon as a base. More specifically, it relates to $\alpha$-sialon-containing ceramics which are excellent in physical properties such as strength, toughness and hardness and have good electrical conductivity and are useful as, for example, machine structural components in the engineering fields.

### BackgroundTechnology

Sialon is a generic term for substances having a basic structure Si-Al-O-N resulting from substitution of Al at the site of Si and O at the site of N in silicon nitride ($Si_3N_4$), and $\beta$-sialon and $\alpha$-sialon are known. $\beta$-Sialon results from dissolution and substitution of Al at the site of Si and O at the site of N in the $\beta$-$Si_3N_4$ crystal structure, and is produced, for example, by hot-pressing a mixture of $Si_3N_4$, $Al_2O_3$ and AlN, or heating a molded article of this mixture in a nitrogen atmosphere under 1 atmosphere. It is represented by the composition formula $(Si,Al)_6(O,N)_8$ or $Si_{6-z}Al_zN_{8-z}$ where $0<z\leqq4.2$.

On the other hand, $\alpha$-sialon is a substance having a structure resulting from substitution of Al at the site of Si and O at the site of N in an $\alpha$-$Si_3N_4$ crystal structure and interstitial dissolution of such elements as Li, Mg, Ca and Y between the crystal lattices. It is characterized by being stable at high temperatures. The technology of producing $\alpha$-sialon sintered bodies (ceramics) was developed by M. Mitomo, one of the present inventors, [see, for example, Yogyo-Kyokai-Shi 85 [81, 50-54 (1977); Japanese Patent Publications Nos. 23346/1983 and 35950/1983]. Later, Hampshire et al., in Nature, 274, 880 (1978), presumed that $\alpha$-sialon is formed by the dissolution of such elements as Mg, Ca and $\overline{Y}$ between the lattices of $\alpha$-$Si_3N_4$ crystals. Furthermore, Grand et al., in J. Mater. Sci., 14, 1749 (1979), analyzed the composition of $\alpha$-sialon in which Y is dissolved, and suggested the composition formula $Y_x(Si,Al)_{12}(O,N)_{16}$.

$\alpha$-Sialon ceramics are a material discovered through the above-mentioned course of research. Now, the $\alpha$-sialon ceramics are expressed by the general formula $M_x(Si,Al)_{12}(O,N)_{16}$ wherein M represents Li, Mg, Ca, Y or a lanthanide metal element excepting La and Ce, and $0<x\leqq2$, pressureless sintering and pressure sintering have been proposed as methods for production thereof (see the Japanese Patent Publications Nos. 23346/1983 and 35950/ 1983 cited above). For some applications, the resulting $\alpha$-sialon ceramics alone do not have sufficiently high mechanical properties, and the pressureless sintering method which is simple and can be easily applied to the production of complexly shaped products has the disadvantage that about 3 to 5% of pores usually remain in the resulting sintered bodies, and sintered bodies of high strength are difficult to obtain.

The present inventors, therefore, made extensive investigations in order to improve the properties of the $\alpha$-sialon ceramics. These investigations have now led to the discovery that a unitary sintered body (ceramics) of $\alpha$-sialon and an oxide, carbide or boride of a certain metal has high fracture toughness, hardness, electrical conductivity, etc. which can meet conditions for machine structural component parts in the engineering fields. The present invention has been accomplished on the basis of this discovery.

### Disclosureof the Invention

According to this invention, there are provided high-strength $\alpha$-sialon-containing ceramics consisting substantially of an $\alpha$-sialon composition represented by the composition formula

$$Y_x(Si,Al)_{12}(O,N)_{16}$$

wherein $0<x\leqq0.8$,

and at least one member selected from metal oxides, nitrides, carbides and borides incapable of dissolving in the $\alpha$-sialon, and containing 10 to 95% by weight of a crystal phase of the $\alpha$-sialon.

The $\alpha$-sialon constituting the ceramics of the present invention is Y-$\alpha$-sialon containing yttrium (Y) as an element dissolved in interstitial sites and having especially high mechanical strength among $\alpha$-sialons. It is generally represented by the composition formula $Y_x(Si,Al)_{12}(O,N)_{16}$ in which x representing the proportion of Y is larger than 0 but not exceeding 0.8, preferably from 0.1 to 0.6. Within the range of $0.4\leqq x\leqq0.8$, the $\alpha$-sialon composition consists substantially of a single crystal phase of Y-$\alpha$-sialon. On the other hand, within the range of $0<x<0.4$, the Y-$\alpha$-sialon composition consists substantially of a composite structure of granular crystal grains of $\alpha$-sialon and prismatic crystal grains of $\beta$-silicon nitride. The content of $\beta$-silicon nitride in

this case varies depending upon the proportions of the raw materials, the sintering conditions, etc., and is within the range of 0 to 89% by weight based on the weight of the α-sialon composition.

It should be understood that the term "α-sialon composition", as used in the present specification and claims, denotes not only single-phase crystals of Y-α-sialon, but also a composition consisting of a composite structure of a Y-α-sialon crystal phase and a β-silicon nitride crystal phase.

Y sometimes remains undissolved in the grain boundaries as a glass phase in Y-α-sialon. Hence, the Y-α-sialon can usually contain not more than 5% by weight (based on the weight of the Y-α-sialon) of a glass phase in addition to the aforesaid crystal phase.

The ceramics of this invention contains 10 to 95% by weight, based on the weight of the ceramics, of the aforesaid Y-α-sialon crystal phase, and its preferred content depends upon the type of the metal oxide, nitride, carbide or boride incapable of dissolving in α-sialon, which is to be mixed with the α-sialon composition.

The metal oxide, nitride, carbide or boride incapable of dissolving in α-sialon (to be sometimes referred to hereinafter as the "non-dissolving components") which constitutes the ceramics of this invention does not substantially dissolve interstitially in the crystal lattices of α-sialon, but forms the sintered body as a mere mixture with α-sialon. Examples of the oxide are oxides ($Cr_2O_3$, $Sc_2O_3$, $La_2O_3$, $CeO_2$, $SiO_2$, $ZrO_2$, $TiO_2$, BeO, etc.) of metals such as Cr, Sc, La, Ce, Si, Zr, Ti and Be. Examples of the nitride and carbide are nitrides and carbides (e.g., BN, TiN, CrN, ZrN, HfN, VN, $Cr_2N_4$, NbN, MoN, TaN, $B_4C$, ZrC, HfC, WC, TiC, $Cr_2C_3$, NbC, $Mo_2C$, TaC, SiC) of metals such as B, Ti, Cr, Zr, Nb, Mo, Hf, Ta, W, Si, and V. Examples of the boride are borides (e.g., $TiB_2$, $ZrB_2$) of metals such as Ti, Zr, W, Mo, Ta or Nb. These non-dissolving components may be used singly, or in combination.

Suitable oxides include $SiO_2$, $CeO_2$ and $ZrO_2$. Suitable nitrides and carbides include BN, TiN, $B_4C$, SiC, TiC and WC. Suitable borides are $TiB_2$ and $ZrB_2$. The contents of the preferred non-dissolving components in the α-sialon ceramics of the invention are as follows:-

| Non-dissolving component | General range (wt%) * | Preferred range (wt%) * |
| --- | --- | --- |
| $SiO_2$ | 0.1 - 5 | 0.1 - 3 |
| $CeO_2$ | 0.1 - 2.5 | 0.1 - 2.5 |
| $ZrO_2$ | 0.1 - 10 | 2.5 - 10 |
| BN | 0.5 - 30 | 5 - 30 |
| TiN | 0.5 - 30 | 5 - 30 |
| $B_4C$ | 0.5 - 30 | 5 - 30 |
| SiC | 0.5 - 30 | 5 - 30 |
| TiC | 0.5 - 30 | 5 - 30 |
| WC | 0.5 - 30 | 5 - 30 |
| $TiB_2$ | 0.5 - 30 | 5 - 30 |
| $ZrB_2$ | 0.5 - 30 | 5 - 30 |

*: The above weight percentages are based on the weight of the ceramics. Hence, the weight percent obtained by subtracting the weight percent of non-dissolving components from the weight of the ceramics is the content of the α-sialon component.

The α-sialon-containing ceramics of this invention are a uniform sintered body of the α-sialon and the non-dissolving components, and can be produced, for example, by mixing silicon nitride, aluminum nitride and yttrium oxide or a yttrium-containing compound convertible to yttrium oxide under sintering conditions, which are the raw materials for the production of α-sialon, with the non-dissolving components, pulverizing the mixture, molding it, and subjecting the molded article to pressureless sintering, pressure sintering or two-stage sintering composed of pressureless sintering and then pressure sintering in an inert gaseous atmosphere.

Examples of the yttrium-containing compound which can be used as one raw material are inorganic or organic salts of yttrium such as the carbonates, basic carbonates, hydroxides and oxalates, and yttrium alkoxides.

Silicon nitride, aluminum nitride and yttrium oxide or the yttrium-containing compound can be mixed in theoretical proportions which give the desired α-sialon of the composition formula [ $Y_x(Si,Al)_{12}(O,N)_{16}$ ],and the non-dissolving component may be mixed therewith in a proportion corresponding to the aforesaid composition. Typical examples of the mixing proportions of the individual components are as follows.

(1) $Si_3N_4$ 85 - 95 wt%, AlN 3 - 6.5 wt%, $Y_2O_3$ 1 - 4 wt%, and $SiO_2$ 0.1 - 5 wt% or $CeO_2$ 0.1 - 2.5 wt%.

(2) $Si_3N_4$ 80 - 90 wt%, AlN 5.5 - 6.5 wt%, $Y_2O_3$ 3 - 4 wt%, and $ZrO_2$ 2.5 - 10 wt%.

(3) $Si_3N_4$ 45 - 80 wt%, AlN 8.5 - 16.5 wt%, $Y_2O_3$ 5 - 10 wt%, and BN, TiN, CrN, $B_4C$, SiC, TiC or WC 0.5 - 30 wt%.

(4) $Si_3N_4$ 60 - 90 wt%, AlN 4 - 6.5 wt%, $Y_2O_3$ 2.5 - 4 wt%, and $TiB_2$ or $ZrB_2$ 0.3 - 30 wt%.

The starting mixture mixed in the above proportions is uniformly pulverized and mixed by using, for example, a vibratory mill, an attrition mill or a ball mill, and then molded into a predetermined shape. Molding can be carried out by, for example, forming in a mold, slurry casting, isostatic pressing or injection molding. The molded product so obtained is then sintered. Sintering can be carried out by a pressureless sintering method (see Japanese Patent Publication No. 23346/1983), a pressure sintering method (see Japanese Patent Publication No. 35950/1983), or a two-stage sintering method consisting of pressureless sintering and subsequent pressure sintering. Where the non-dissolving component is an oxide, the pressureless sintering method or the two-stage sintering method is used advantageously. On the other hand, when the non-dissolving components are a nitride, carbide or boride, it is desirable to use a high-temperature and high-pressure sintering method because these substances are difficult of sintering.

Pressureless sintering can be carried out by covering the molded product with a powder containing silicon nitride, for example, a powder of silicon nitride alone or a powder of a mixture of silicon nitride and aluminum nitride, and then heating it in an inert gaseous atmosphere, such as a nitrogen stream. The sintering temperature is generally 1600 to 2000°C, preferably 1650 to 1800°C. The sintering time is usually 30 minutes to 10 hours, preferably 1 to 5 hours.

Pressure sintering is carried out by subjecting the molded product to gas pressure sintering, hot isostatic sintering, hot pressing, etc. in an inert gaseous atmosphere. Advantageously, the pressure used is generally at least 30 kg/cm², preferably 50 to 2000 kg/cm². The sintering temperature is generally 1600 to 2000°C, preferably 1600 to 1850°C, and the sintering time is usually 30 minutes to 5 hours, preferably 1 to 3 hours.

The two-stage sintering can be carried out by first preparing a pre-sintered body by the pressureless sintering method as stated above, and then subjecting it to pressure sintering as above.

In the above manufacturing process, treatments such as material mixing, pulverization, molding and drying are preferably carried out in an organic solvent and in a non-oxidizing atmosphere in order to minimize inclusion of $Al_2O_3$ in the resulting ceramics. It is also desirable to avoid use of $Al_2O_3$-containing ceramics in containers or pulverizing media used in the process.

Best Mode of Practicing the Invention

The following examples illustrate the present invention more specifically.

EXAMPLE 1

In each run, silicon nitride (particle diameter less than 1 micrometer; cationic impurities less than 0.5%), aluminum nitride (particle diameter less than 1 micrometer; cationic impurities less than 0.5%), yttrium oxide (particle diameter less than 1 micrometer; purity 99.8%), and either $SiO_2$ (mean particle diameter 0.5 micrometer, purity 99.8%) or $CeO_2$ (mean particle diameter 0.6 micrometer, purity 99.6%) were mixed in the proportions indicated in Table 1 below for 5 hours in a vibratory mill lined with silicon nitride ceramics (solvent: hexane; using silicon nitride balls).

The resulting mixture was molded under a pressure of 2 tons/cm² by a cold isostatic press to form a molded article having a size of 60 x 60 x 10 mm. The molded article was fired at 1750°C for 2 hours in a nitrogen gas atmosphere in a pressureless sintering furnace.

The resulting sintered body was cut, and by surface grinding, a test sample, 3 x 4 x 40 mm in size, was prepared. The flexural strength of the sample was measured by the three-point bending method in accordance with JIS R1601. The results are shown in Table 1.

EP 0 250 593 B1

Table 1

| No. | Mixing proportions (wt%) | | | | | Content of the $\alpha$-sialon crystal phase (%)(*2) | Three-point flexural strength (kg/mm$^2$) |
|---|---|---|---|---|---|---|---|
| | Si$_3$N$_4$ | Y$_2$O$_3$ | AlN | SiO$_2$ | CeO$_2$ | | |
| 1 | 88.8 | 3.9 | 6.3 | 1.0 | - | 40 | 95 |
| 2 | 87.5 | 3.8 | 6.2 | 2.5 | - | 39 | 90 |
| 3 | 90.1 | 1.9 | 3.0 | 5.0 | - | 35 | 90 |
| 4 | 88.8 | 3.9 | 6.3 | - | 1.0 | 40 | 90 |
| 5 | 92.4 | 2.0 | 3.1 | - | 2.5 | 37 | 85 |
| Comparative Example (*1) | 89.7 | 3.9 | 6.4 | - | - | 42 | 80 |

(*1) : Corresponding to $Y_{0.2}(Si,Al)_{12}(O,N)_{16}$
(*2) : By X-ray diffraction.

EXAMPLE 2

In each run, a mixture having each of the formulations shown in Table 2 was treated in the same way as in Example 1 to form a pre-sintered body. The pre-sintered body was heated at 1800°C for 2 hours in a nitrogen gas atmosphere under 100 kg/cm$^2$.

The three-point flexural strength of the sintered body was measured as in Example 1. The contents of the $\alpha$-sialon crystal phase and the $\beta$-silicon nitride crystal phase were also measured. The results are shown in Table 2.

6

Table 2

| No. | Mixing proportions (wt%) | | | | | Three-point flexural strength (kg/mm²) | | Content of the α-sialon crystal phase (%) |
|---|---|---|---|---|---|---|---|---|
| | $Si_3N_4$ | $Y_2O_3$ | AlN | $SiO_2$ | $CeO_2$ | Room temperature | 1200°C | |
| 6 | 89.3 | 3.9 | 6.3 | 0.5 | - | 100 | 80 | 43 |
| 7 | 88.8 | 3.9 | 6.3 | 1.0 | - | 120 | 85 | 42 |
| 8 | 87.9 | 3.8 | 6.3 | 2.0 | - | 115 | 75 | 41 |
| 9 | 89.3 | 3.9 | 6.3 | - | 0.5 | 110 | 85 | 44 |
| 10 | 88.8 | 3.9 | 6.3 | - | 1.0 | 120 | 80 | 43 |
| 11 | 87.9 | 3.8 | 6.3 | - | 2.0 | 120 | 75 | 42 |
| Comparative Example (*) | 89.7 | 3.9 | 6.4 | - | - | 80 | 65 | 45 |

(*) : Corresponding to $Y_{0.2}(Si,Al)_{12}(O,N)_{16}$

EXAMPLE 3

In each run, the same silicon nitride, aluminum nitride and $Y_2O_3$ as used in Example 1 and $ZrO_2$ (mean particle diameter 0.7 micrometer, purity 99.5%) were mixed in the proportions shown in Table 3, and pulverized and molded as in Example 1. The molded product was fired at 1750°C for 2 hours in a nitrogen gas atmosphere in a pressureless sintering furnace.

The surface of the resulting sintered body was polished, and its fracture toughness value was measured by the Vickers indentation microfracture method. The results are shown in Table 3.

## Table 3

| No. | Mixing proportions (wt%) | | | | Content of the $\alpha$-sialon crystal phase (%) | Fracture toughness value 3 (MN/m$\overline{2}$) |
|---|---|---|---|---|---|---|
| | $Si_3N_4$ | $Y_2O_3$ | AlN | $ZrO_2$ | | |
| 12 | 87.5 | 3.8 | 6.2 | 2.5 | 27 | 6.5 |
| 13 | 85.2 | 3.7 | 6.1 | 5.0 | 23 | 7.0 |
| 14 | 80.7 | 3.5 | 5.8 | 10.0 | 20 | 7.5 |
| Comparative Example (*) | 89.7 | 3.9 | 6.4 | – | 42 | 6.0 |

(*) : Corresponding to $Y_{0.2}(Si,Al)_{12}(O,N)_{16}$

## EXAMPLE 4

In each run, the same silicon nitride, aluminum nitride and $Y_2O_3$ as used in Example 1 and either BN, TiN, CrN, TiC, $B_4C$, SiC or WC were mixed in the proporitons shown in Table 4, and pulverized and mixed as in Example 1. The pulverized mixture was dried, and then molded under 500 kg/cm$^2$ by a cold isostatic press to form a pre-molded product.

The pre-molded product was sintered by hot pressing at 1800°C under a pressure of 500 kg/cm$^2$ for 1 hour to obtain a sintered body. The density of the resulting sintered body is more than 98% of the theoretical density.

A surface-polished test sample was prepared from the resulting sintered body and its hardness was evaluated by a Vickers hardness tester. The results are shown in Table 4.

Table 4

| No. | Si₃N₄ | Y₂O₃ | AlN | BN | TiN | CrN | TiC | B₄C | SiC | WC | Content of the α-sialon crystal phase (%) | Vickers hardness (kg/mm²) |
|---|---|---|---|---|---|---|---|---|---|---|---|---|
| | | | | | | | Mixing proportions (wt%) | | | | | |
| 12 | 76.0 | 7.2 | 11.8 | 5.0 | — | — | — | — | — | — | 93 | 1800 |
| 13 | 72.0 | 6.8 | 11.2 | 10.0 | — | — | — | — | — | — | 88 | 1800 |
| 14 | 72.0 | 6.8 | 11.2 | — | 10.0 | — | — | — | — | — | 87 | 1800 |
| 15 | 72.0 | 6.8 | 11.2 | — | 5.0 | — | 5.0 | — | — | — | 87 | 1800 |
| 16 | 72.0 | 6.8 | 11.2 | — | — | 10.0 | — | — | — | — | 86 | 1850 |
| 17 | 72.0 | 6.8 | 11.2 | — | — | — | — | 10.0 | — | — | 87 | 1850 |
| 18 | 64.0 | 6.1 | 9.9 | — | — | — | — | 20.0 | — | — | 73 | 1900 |
| 19 | 56.0 | 5.3 | 8.7 | — | — | — | — | 30.0 | — | — | 68 | 2000 |
| 20 | 72.0 | 6.8 | 11.2 | — | — | — | — | 5.0 | — | 5.0 | 88 | 1900 |
| 21 | 72.0 | 6.8 | 11.2 | — | — | — | — | — | 5.0 | 5.0 | 87 | 1900 |
| 22 | 63.7 | 10.0 | 16.3 | — | — | — | 10.0 | — | — | — | 88 | 2000 |
| 23 | 56.6 | 8.9 | 14.5 | — | — | — | 20.0 | — | — | — | 77 | 2000 |
| 24 | 49.6 | 7.8 | 12.7 | — | — | — | 30.0 | — | — | — | 68 | 2000 |
| Comparative Example (*) | 80.0 | 7.6 | 12.4 | — | — | — | — | — | — | — | 100 | 1700 |

(*) : Corresponding to $Y_{0.2}(Si,Al)_{12}(O,N)_{16}$

EXAMPLE 5

The same silicon nitride, aluminum nitride and $Y_2O_3$ as used in Example 1 and commercialy highly pure $TiB_2$ or $ZrB_2$ were mixed in the proportions shown in Table 5 below, and pulverized and mixed as in Example 1. The pulverised mixture was dried, and molded by a cold isostatic press under 500 kg/cm² to form a pre-molded article.

The pre-molded article was sintered by hot pressing at 1800°C under 300 kg/cm² for 1 hour in a nitrogen gas atmosphere. The electrical conductivity of the resulting sintered body was measured, and the results are shown in Table 5.

Since $TiB_2$ and $ZrB_2$ are electrically conductive materials, the electrical conductivity of the resulting ceramics was higher than that of α-sialon ceramics represented by $Y_{0.2}(Si,Al)_{12}(O,N)_{16}$, an insulating

material, as shown in Table 5.

Table 5

| No. | Mixing proportions (wt%) | | | | | Content of the $\alpha$-sialon crystal phase (%) | electrical conductivity (S/cm) |
|---|---|---|---|---|---|---|---|
| | $Si_3N_4$ | $Y_2O_3$ | AlN | $TiB_2$ | $ZrB_2$ | | |
| 25 | 85.2 | 3.7 | 6.1 | 5.0 | - | 32 | $10^{-12}$ |
| 26 | 80.7 | 3.5 | 5.8 | 10.0 | - | 23 | $4 \times 10^{-6}$ |
| 27 | 71.8 | 3.1 | 5.1 | 20.0 | - | 16 | $1.5 \times 10^{-2}$ |
| 28 | 62.8 | 2.7 | 4.5 | 30.0 | - | 14 | 2.5 |
| 29 | 85.2 | 3.7 | 6.1 | - | 5.0 | 30 | $10^{-10}$ |
| 30 | 80.7 | 3.5 | 5.8 | - | 10.0 | 24 | $7 \times 10^{-5}$ |
| 31 | 71.8 | 3.1 | 5.1 | - | 20.0 | 15 | 1.0 |
| 32 | 62.8 | 2.7 | 4.5 | - | 30.0 | 10 | 15.0 |
| Comparative Example (*) | 89.7 | 3.9 | 6.4 | - | - | 42 | $10^{-14}$ |

(*) : Corresponding to $Y_{0.2}(Si,Al)_{12}(O,N)_{16}$

Industrial Utilizability

As stated above, the $\alpha$-sialon-containing ceramics provided by this invention are excellent in such properties as flexural strentgth, fracture toughness, hardness and electrical conductivity, and find possible applications in the engineering fields as various machine structural components parts, electrode materials, etc.

**Claims**

1. High-strength $\alpha$-sialon-containing ceramics consisting substantially of an $\alpha$-sialon composition represented by the composition formula

   $Y_x(Si,Al)_{12}(O,N)_{16}$

   wherein $0 < x \leq 0.8$,
   and at least one member selected from metal oxides, nitrides, carbides and borides incapable of dissolving in the $\alpha$-sialon, and containing 10 to 95% by weight of a crystal phase of the $\alpha$-sialon.

2. The ceramics set forth in claim 1 wherein x is within the range of 0.1 to 0.6.

3. The ceramics set forth in claim 1 wherein the $\alpha$-sialon composition consists substantially of a composite structure of an $\alpha$-sialon crystal phase and a $\beta$-silicon nitride crystal phase.

4. The ceramics set forth in claim 3 wherein the content of the $\beta$-silicon nitride crystal phase is within the range of 0 to 89% by weight based on the weight of the $\alpha$-sialon composition.

5. The ceramics set forth in claim 1 wherein the metal oxides are $SiO_2$, $CeO_2$ and $ZrO_2$.

6. The ceramics set forth in claim 1 wherein the metal nitrides and carbides are BN, TiN, $B_4C$, SiC, TiC and WC.

7. The ceramics set forth in claim 1 wherein the metal borides are $TiB_2$ and $ZrB_2$.

8. A process for producing the ceramics set forth in claim 1, which comprises mixing silicon nitride, aluminum nitride, yttrium oxide or a yttrium-containing compound convertible to yttrium oxide under sintering conditions, and at least one member selected from metal oxides, nitrides, carbides and borides incapable of dissolving in $\alpha$-sialon, pulverizing the mixture, molding it, and sintering the molded article at a temperature of 1600 to 2000°C in an inert gaseous atmosphere.

**Revendications**

1. Matériaux céramiques à grande résistance mécanique contenant du α-sialon, constitués essentiellement d'une composition de α-sialon représentée par la formule de composition

$$Y_x(Si,Al)_{12}(O,N)_{16}$$

où $0 < x \leq 0,8$,
et d'au moins une espèce choisie parmi les oxydes, nitrures, carbures et borures de métaux, incapables de se dissoudre dans le α-sialon ; et contenant 10 à 95 % en poids d'une phase cristalline du α-sialon.

2. Matériaux céramiques selon la revendication 1, dans lesquels x est compris dans l'intervalle de 0,1 à 0,6.

3. Matériaux céramiques selon la revendication 1, dans lesquels la composition de α-sialon consiste essentiellement en une structure composite d'une phase cristalline de α-sialon et d'une phase cristalline de β-nitrure de silicium.

4. Matériaux céramiques selon la revendication 3, dans lesquels la teneur en phase cristalline de β-nitrure de silicium est comprise dans l'intervalle de 0 à 89 % en poids par rapport au poids de la composition de α-sialon.

5. Matériaux céramiques selon la revendication 1, dans lesquels les oxydes de métaux sont $SiO_2$, $CeO_2$ et $ZrO_2$.

6. Matériaux céramiques selon la revendication 1, dans lesquels les nitrures et carbures de métaux sont BN, TiN, $B_4C$, SiC, TiC et WC.

7. Matériaux céramiques selon la revendication 1, dans lesquels les borures de métaux sont $TiB_2$ et $ZrB_2$.

8. Procédé de production des matériaux céramiques définis dans la revendication 1, qui consiste à mélanger du nitrure de silicium, du nitrure d'aluminium et de l'oxyde d'yttrium ou un composé contenant de l'yttrium transformable en oxyde d'yttrium dans les conditions de frittage, et au moins une espèce choisie parmi les oxydes, nitrures, carbures et borures de métaux, incapables de se dissoudre dans le α-sialon, pulvériser le mélange, le mouler et fritter l'article moulé à une température de 1600 à 2000°Cdans une atmosphère de gaz inerte.

**Patentansprüche**

1. α-Sialon enthaltende Keramiken mit hoher Festigkeit, **dadurch gekennzeichnet,** daß sie im wesentlichen aus einer α-Sialonmasse mit folgender Zusammmensetzungsformel

$$Y_x(Si,Al)_{12}(O,N)_{16}$$

worin $0<x\leq0.8$ und mindestens einer Substanz, ausgewählt aus Metalloxiden, -nitriden, -carbiden und -boriden, die sich nicht in dem α-Sialon auflösen, bestehen und daß sie 10 bis 95 Gew.-% einer Kristallphase des α-Sialons enthalten.

2. Keramiken nach Anspruch 1, **dadurch gekennzeichnet,** daß x im Bereich von 0,1 bis 0,6 liegt.

3. Keramiken nach Anspruch 1, **dadurch gekennzeichnet,** daß die α-Sialonmasse im wesentlichen aus einer Verbundstruktur aus einer α-Sialonkristallphase und einer ß-Siliciumnitridkristallphase besteht.

4. Keramiken nach Anspruch 3, **dadurch gekennzeichnet,** daß der Gehalt der ß-Siliciumnitridkristallphase im Bereich von 0 bis 89 Gew.-%, bezogen auf das Gewicht der α-Sialonmasse, liegt.

5. Keramiken nach Anspruch 1, **dadurch gekennzeichnet,** daß die Metalloxide $SiO_2$, $CeO_2$ und $ZrO_2$ sind.

6. Keramiken nach Anspruch 1, **dadurch gekennzeichnet,** daß die Metallnitride und -carbide BN, TiN, $B_4C$, SiC, TiC und WC sind.

7. Keramiken nach Anspruch 1, **dadurch gekennzeichnet,** daß die Metallboride $TiB_2$ und $ZrB_2$ sind.

8. Verfahren zur Herstellung der Keramiken nach Anspruch 1, **dadurch gekennzeichnet,** daß man Siliciumnitrid, Aluminiumnitrid, Yttriumoxid oder eine unter Sinterbedingungen in Yttriumoxid umwandelbare Yttrium enthaltende Verbindung und mindestens eine Substanz, ausgewählt aus Metalloxiden, -nitriden, -carbiden und -boriden, die sich nicht in dem α-Sialon auflösen, vermischt, das Gemisch pulverisiert, verformt und daß man den Formkörper bei einer Temperatur von 1600 bis 2000°C in einer inerten Gasatmosphäre sintert.